# EUROPEAN PATENT APPLICATION

(11) **EP 2 246 366 A1**
(43) Date of publication of application: **03.11.2010**
(21) Application number: 09450062.6
(22) Date of filing: 24.03.2009
(51) Int. Cl.: C08B 31/12, B01L 3/00, C08J 3/16

(54) **Process and device for preparing starch microgel particles for the paper industry**

(71) Applicant: Mondi Limited South Africa, Melrose Arch 2196 Johannesburg (ZA); Mondi Uncoated Fine & Kraft Paper GmbH, 1032 Wien (AT)
(72) Inventor: Kornherr, Andreas, 1100 Wien (AT); Eder, Florian, 1190 Wien (AT); Janse, Bernard Johannes Heinrich, Collierville 38017 Tennessee (US); Sanderson, Ronald Douglas, Stellenbosch 7600 (ZA); Terblanche, Johannes Christoffel, Bellville 7539 (ZA); Zou, Mingxuan, 230088 Hefei (CN)
(74) Representative: Cunow, Gerda

(57) **Abstract**

A process for making starch particles in a microfluidic reactor, comprising at least two immiscible liquid inlet streams, in which process the two liquid streams are forced through a plurality of adjacent microchannels of the microfluidic reactor and joined together to form an outlet stream of a water-in-oil (w/o) emulsion system, where the discontinuous phase will be a mixture based on aqueous starch or polysaccharide and a continuous phase will be an oil/solvent based system.

Furthermore a device for producing starch particles is provided.

## Description

The present invention is directed to a process for making starch or polysaccharides particles in a microfluidic reactor. In particular the present invention relates to a process of preparing cross-linked functionalized starch or polysaccharides particles using a microfluidic device. These particles are generally suitable for use in the paper/board industries to enhance mechanical strength. Moreover the present invention is directed to provide a device for producing starch or polysaccharides particles.

In the last years it was shown that paper shows especially good mechanical properties when particle size distribution in the paper. For obtaining improved mechanical properties of the paper the use of an emulsion made of a polysaccharide solution in an oil phase was proposed. Herewith the conventional water-in-oil (w/o) emulsion method is the most commonly used method for preparing spherical polysaccharide particles. Generally, a polysaccharide solution is emulsified in an oil phase, such as heptane, cyclohexane, or even vegetable oil with the assistance of a lipophilic surfactant, such as sorbitan monooleate.

The starch particles are usually cross-linked by reactions of the hydroxyl group with polyfunctional reagents or by radical polymerization of unsaturated groups created on the starch.

In US-A 2007/0122487 a water-in-oil emulsion method is used to prepare hydroxyethyl starch gel particles by radical polymerization of acryloyl groups on hydroxyethyl starch.

In CN-A 1502648 a starch solution is emulsified together with some monomers in vegetable oil and consecutively cross-linked by radical polymerization.

In US-A 6,755,915 a special water-in-oil emulsion method was investigated, where the water-in-oil emulsion was converted from an oil-in-water emulsion by temperature control, then starch particles were cross-linked and separated by conventional separation techniques.

In Journal of Colloid and Interface Science 246, 48-59 (2002) and in Journal of Material Science: Material Medicine 17, 371-377(2006), starch particles were prepared by water-in-oil emulsification and the particles cross-linked using epichlorohydrine and trisodium trimetaphosphate, respectively. It is easy to control the size of the particles using this method, but solvent and surfactants have to be removed from the final particles. This process uses a totally different route to the one that will be described in this patent.

The solvent exchange method is also often used. In CN-A 1951979 a starch solution, e.g. in dimethyl sulfoxide, is added dropwise to a mixture of water/ethanol/surfactant, e.g. sodium dodecyl benzene sulphate, to form starch particles.

According to the article of El-Tahlawy, K., et al. [Carbohydrate Polymers 67(3), 319-331 (2007)], starch microcellular foam particles were prepared by precipitation of a cooked starch solution cross-linked with glutaraldehyde under shear with ethanol. Effects, such as the viscosity of the starch solution, stirring speed during the precipitation and cross-linking content on the particle morphology and size were studied. The method was also applied in US-A 6,703,048.

Furthermore, microfluidic systems have gained great interest over recent years in fields such as biomedicine and biochemistry to produce controlled drug delivery systems. Microfluidic systems are also known as micro mixers, microreactors, microfabricated systems and lab-on-a-chip. Microfluidic refers to a device that contains a network of chambers connected by channels, in which the channels have mesoscale dimensions, e.g., having at least one cross-sectional dimension in the range from about 0,1 µm to about 500 µm.

It is also known to use microfluidic systems or microfluidic reactors for preparing emulsions used for different purposes.

Microfluidic reactor systems have been used for the fabrication of 10 µm sized monodisperse microgels by emulsifying an aqueous dextran hydroxyethyl methacrylate phase within an oil phase at the junction of microfluidic channels (De Geest, B. G., et al., Langmuir 21(23), 10275-10279 (2005)). This is the first use of microfluidics in grafting onto starch particles and using an oil phase. These particles are predominantly suited for use in the biomedical and drug delivery industries and do not include functional groups in the gel particles that can be applied as retention aid for the paper/board industry.

The present invention therefore aims at producing extremely homogeneous emulsions and especially producing starch microgel particles which can be used in the paper industry which starch particles show an homogeneous size distribution and which particles can therefore enhance the properties of the final product, namely the paper or the card board.

For solving the above-mentioned problem according to the present invention a process for making starch particles in a microfluidic reactor is provided comprising at least two immiscible liquid inlet streams, in which process the two liquid streams are forced through a plurality of adjacent microchannels of the microfluidic reactor and joined together to form an outlet stream of a water-in-oil (w/o) emulsion system, where the discontinuous phase will be a mixture based on aqueous starch or polysaccharide and a continuous phase will be an oil/solvent based system.

With such a inventive process stable water-in-oil polysaccharide emulsions can be prepared using microfluidic reactors. Furthermore it is possible with such a process to produce starch particles with various particles sizes and with extremely narrow size distributions. Therefore a great uniformity of the final microgel starch particles can be obtained with such a process and in the following the whole paper show excellent properties, especially mechanical properties.

Especially microfluidic systems offer various benefits as a process of emulsification, such as a continuous process for preparing particles, wherein starch particles can be emulsified and cross-linked directly in a pipe-flow reactor system and introduced directly to the process. A further benefit is that the particle size and distribution can be manipulated easily by adjusting the pressure and/or flowrates of the feed streams through the microfluidic reactor. Generally it is possible to produce very monodisperse particles using this process. Furthermore, since there are no mechanically moving parts, energy input is much less than conventional batch reactor systems. The process can easily be scaled-up using several microfluidic devices in parallel.

Because of the fact that the two liquid streams are forced through a plurality of adjacent microchannels of the microfluid reactor and joined together to form an outlet stream of a water-in-oil emulsion, one can obtain an extremely homogeneous and fine emulsion, in which emulsion the starch particles are uniformly distributed.

By adding a polyvinylalcohol with a molecular weight of between 5.000 and 140.000, preferably between 5.000 and 30.000, to the mixture based on starch or polysaccharide, it is preferably possible to prepare particles with stronger adhesive ability. Especially, if the ratio of polysaccharide to polyvinylalcohol is between 100:0 and 40:60, preferably between 100:0 and 70:30, the adhesive ability of the prepared starch microgel particles can be further enhanced. In such a mixture the solid content can be as high as 30 wt%, but preferably 3 to 15 wt%, for obtaining the best results.

If the continuous phase and especially the solvent in the continuous phase is a hydrophobic solvent, such as for example cyclohexane or heptane, it is possible to obtain an extremely homogeneous and stable emulsion.

Especially for stabilizing the polysaccharide emulsion which is formed after passing through the microchannels of the microfluidic reactor a lipophilic surfactant such as sorbitan monooleate or a w/o emulsifier such as polyhydroxystearic acid-polyethyleneglycol-polyhydroxystearic acid is introduced into the joined streams. The stability of the emulsion is of great importance for the final product which can be obtained and especially for the homogeneity of the starch microgel particles which will be produced according to the present invention.

Especially for obtaining a defined particle size distribution of the starch microgel particles in the process according to the present invention the starch or polysaccharide particles in the emulsion, which was formed in the microchannels of the microfluidic reactor, are cross linked with a cross linking agent, by radical polymerisation, UV, thermo or gamma ray irradiation.

The best results during the cross-linking can be obtained, if the cross linking agent is added to the emulsion in the presence of a base such as sodium hydroxide. With such a process the obtained starch or polysaccharide microgel particles show a uniform or narrow particle size distribution and especially a great homogeneity concerning the dimensions of the particles.

For obtaining a good and homogeneous product and for avoiding any undesired by-products in the process according to the present invention the cross linking agent is added in an amount of 1 to 10 wt%, preferably 1 to 5 wt% based on the weight of the polysaccharide or starch contained in the emulsion. By adding amounts of 1 to 10 wt%, preferably 1 to 5 wt%, of the cross-linking agent, the cross-linking of the starch or polysaccharide particles can be performed in a sufficient manner and moreover it will be shown that the products obtained have a uniform and homogeneous particle size distribution.

Paper or cardboard products produced with starch or polysaccharide microgel particles which are produced according to the process of the present invention show improved properties, especially an enhanced bending stiffness, tear length, tear resistance and folding endurance, and especially such properties can be obtained in the process according to the present invention, wherein the starch or polysaccharide particles are ionized by addition of an ionic substance such as carboxymethyl chloro ether or quaternary ammonium chloro ether, in the presence of a base.

For obtaining a faster cross-linking and ionization of the particles the process according to the present invention is performed such that after passing the microchannels of the microfluidic reactor and after addition of the cross linking agent and the ionic substance, the produced mixture of the reaction partners is heated to a temperature between 50 to 100 °C in a heating section.

For obtaining an extremely narrow particle size distribution of the starch or polysaccharide microgel particles the outlet stream from the microfluidic reactor is heated in at least two series of heating sections. With such a process it is possible to precisely control the process and therefore also the particle size distribution of the final product, which shows excellent mechanical properties.

In the process according to the present invention it is possible that either one or all components of the reaction system, namely the inlet streams of the liquids, the microfluidic reactor and/or the outlet stream of the microfluidic reactor are located in at least one heat exchanger. With such a process it is especially possible to obtain a very good energy balance of the process and also a final product showing excellent mechanical properties.

Furthermore, the present invention aims at providing a device for producing homogeneous and uniform starch polysaccharide microgel particles for obtaining paper cardboard with enhanced or better properties.

In a device for producing starch or polysaccharide or starch particles two separate liquid inlets are attached to microchannels of a microfluidic reactor, immiscible liquids are unified in the microchannels of the microfluidic reactor and are introduced into a liquid outlet. By providing two separate liquid inlets which are attached to the microchannels of a microfluidic reactor it is possible to provide a uniform inlet stream of two immiscible liquids to a microfluidic reactor and to obtain a defined mixed stream of two immiscible liquids.

With a device in which at the liquid outlet at least one further inlet or duct is attached for introducing a cross-linking agent and/or ionic derivative to the unified immiscible liquids one can obtain a basic mixture for obtaining starch or polysaccharide particles which show a defined and homogeneous emulsion and especially a stable emulsion for reaction and therefore also the final product which can be produced with a device according to the present invention shows homogeneous and defined properties.

Especially for obtaining an extremely small particle size distribution the device according to the present invention contains furthermore at least one of a mixing section, a heating section and a cooling section. Therefore, one or all of mixing sections, heating sections or cooling sections can be contained in the device according to the present invention and even if not all of these additional sections are contained the size distribution of the final product can be adjusted.

The invention is in the following further described on the basis of examples and drawings, wherein:
Fig. 1 is a diagram showing the device layout of a microfluidic system for preparing polysaccharide/starch microgel particles according to the process of the present invention;
Fig. 2 is an image of a multi-lamination micromixer according to the present invention which is used for emulsification of two immiscible fluids;
Fig. 3 shows a particle size distribution of starch and polysaccharide microgel particles which are prepared using different polysaccharide/polyvinylalcohol to solvent flow ratios;
Fig. 4 shows polysaccharide gel particles which are prepared in a microfluidic device according to the present invention at various flow rates.

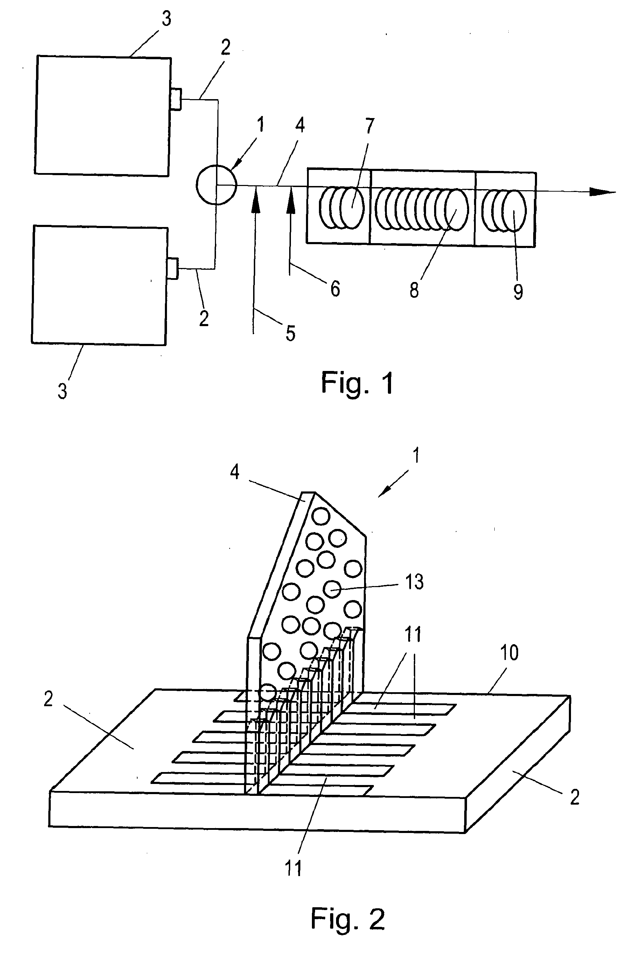

Fig. 1 shows a diagram explaining the process layout of a microfluidic system according to the present invention for preparing polysaccharide or starch particles in solution.

In this diagram a microfluidic reactor 1 is schematically shown, two inlet ducts 2 are connected therewith and both inlet ducts 2 are connected on their other ends with a special solution reservoir or tank 3. On the outlet duct 4 of the microfluidic reactor 1 there are provided two further inlet ducts 5 and 6 for introducing a cross-linking agent and a ionic derivative which are to be mixed with the fluid which leaves the microfluidic reactor 1. After having introduced all components to the liquid or fluid, the fluidic system will be introduced into a mixing section 7 and after leaving the mixing section 7 into a heating section 8 and thereafter into a cooling section 9, whereafter the final starch particle solution leaves the microfluidic reactor system.

In Fig. 2 the microfluidic device 1 is shown in greater detail. Especially it is shown how an emulsion of two immiscible fluids or liquids can be prepared in such a microfluidic device 1.

On the basis 10 of the microfluidic reactor 1 there are attached two different inlet ducts 3 which inlet ducts 3 lead a charge of two immiscible liquids into microchannels 11 of the microfluidic reactor 1. At an outlet slit droplets of fluid 13 penetrate. Because of the fact that the droplets are of a very small dimension there can be prepared an emulsion of two immiscible fluids which emulsion is **characterized in that** the droplets of two immiscible fluids are very small in dimension and therefore one can obtain a highly intense or homogeneous and stable emulsion. This emulsion penetrates the outlet duct 4 of the microfluidic reactor 1 and will be further introduced in the mixing section 7, heating section 8 and/or cooling section 9 for producing starch and polysaccharide particle solutions.

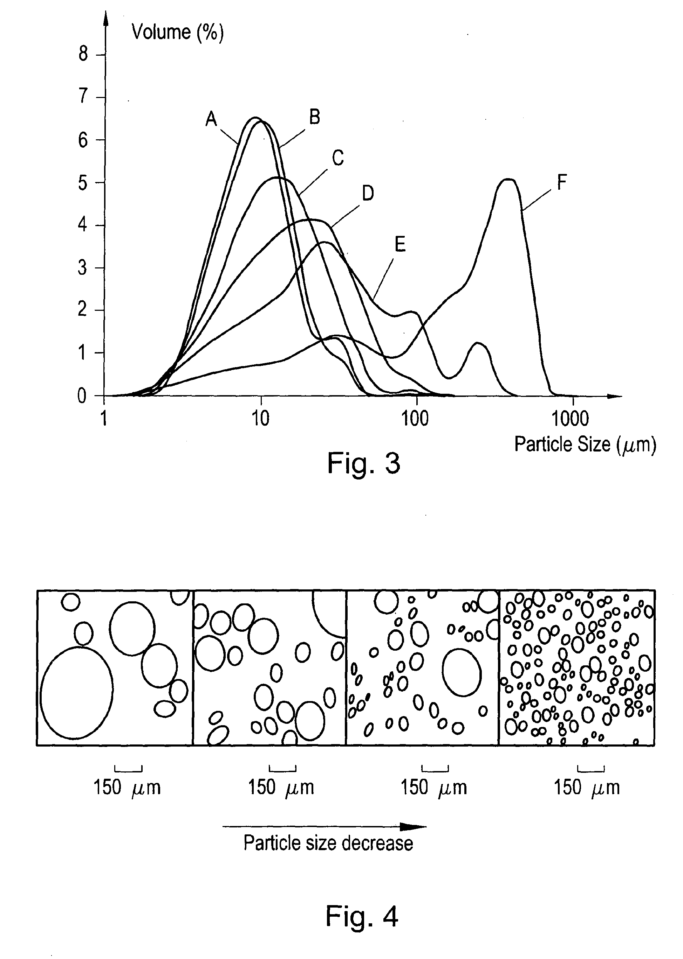

Furthermore, the invention is described by an example in which also Fig. 3 and 4 are described.

### Example

Preparation of starch particles using a microfluidic reactor according to the invention

An anionic starch solution with DS = 0,3 was prepared by adding maize starch (20 g) and acetone (20 g) to a reaction flask. The starch mixture was slurried and sodium hydroxide solution (5 wt%, 100 ml) added. The mixture was heated to 60 °C and sodium monochloroacetate (4,3 g) added. The reaction mixture was stirred continuously for 2 - 3 h. The carboxymethyl starch solution was then allowed to cool and neutralized with hydrochloric acid (32 wt%, 14,3 g). The gel was precipitated in acetone (500 ml). The starch gel was subsequently redissolved in water (200 ml) and once again precipitated in acetone. The redissolving and precipitating steps were repeated until there was no trace of chloride present in the modified starch and could be dried to remove all traces of acetone and water.

An anionic starch/polyvinylalcohol (90:10) mixture was dissolved in NaOH solution (1 %) at about 95 °C. The total solids content of the solution was 2,5 wt%. This was loaded into the first of two vessels and heptane, premixed with Span 80 surfactant (sorbitan monooleate) (4 %), was loaded into the second vessel. The flow rates of the two feed streams through the pumps were adjusted to ensure that the emulsification in the microfluidic reactor occurred at a feed ratio of 40:60 heptane to starch. Epichlorohydrine (rate adjusted to 2 wt% based on total solids) was fed in-line to the emulsion just after passing through the microfluidic reactor. The emulsion was passed through a mixing section to allow sufficient mixing of the cross-linking agent with the emulsion. Subsequently, the mixture was passed through a heating section (90 °C) to allow time for sufficient cross-linking to occur. Upon completion of the reaction the particle solution passed through a cooling section (25 °C) before being collected at the outlet. The final dispersion was neutralized with hydrochloric acid (32 wt%) to a pH of between 7 and 8. The dispersion was centrifuged, and the particles washed and diluted with water to a total solids content of 10 wt%.

The range of particle sizes obtained varied between 10 and 1000 microns.

Fig. 3 presents typical particle size and distributions of polysaccharide particles prepared using various ratios of polysaccharide/polyvinylalcohol : solvent flow rate.

The ratio of polysaccharide/polyvinylalcohol : solvent flow rate in graph A is 50:650 ml/h which results in a mean particle size of 11,6 µm.

The ratio of polysaccharide/polyvinylalcohol : solvent flow rate in graph B is 100:600 ml/h which results in a mean particle size of 11,6 µm.

The ratio of polysaccharide/polyvinylalcohol : solvent flow rate in graph C is 200:500 ml/h which results in a mean particle size of 16,4 µm.

The ratio of polysaccharide/polyvinylalcohol : solvent flow rate in graph D is 300:400 ml/h which results in a mean particle size of 16,8 µm.

The ratio of polysaccharide/polyvinylalcohol : solvent flow rate in graph E is 350:350 ml/h which results in a mean particle size of 26,4 µm.

The ratio of polysaccharide/polyvinylalcohol : solvent flow rate in graph F is 400:300 ml/h which results in a mean particle size of 208,8 µm.

As the polysaccharide/polyvinylalcohol flow rate increased, compared to the solvent flow rate, the mean particle size gradually increased and ultimately became unstable after 350:350 ml/h flow ratio.

Fig. 4 presents optical microscope images of polysaccharide/polyvinylalcohol particles prepared using the microfluidic reactor according to the present invention in which the flow rate of the polysaccharide and solvent is increased, producing particles that gradually decrease in average size.

## Claims

1. A process for making starch particles or polysaccharides in a microfluidic reactor, comprising at least two immiscible liquid inlet streams, in which process the two liquid streams are forced through a plurality of adjacent microchannels of the microfluidic reactor and joined together to form an outlet stream of a water-in-oil (w/o) emulsion system, where the discontinuous phase will be a mixture based on aqueous starch or polysaccharide and a continuous phase will be an oil/solvent based system.

2. The process according to claim 1 wherein a polyvinylalcohol with a molecular weight of between 5.000 and 140.000, preferably between 5.000 and 30.000 is added to the mixture based on starch or polysaccharide.

3. The process according to claim 1 or 2, wherein the continuous phase and especially the solvent in the continuous phase is a hydrophobic solvent, such as for example cyclohexane or heptane.

4. The process according to claim 3, wherein after passing through the microchannels of the microfluidic reactor a lipophilic surfactant, such as sorbitan monooleate, or a w/o emulsifier, such as polyhydroxystearic acid-polyethyleneglycol-polyhydroxstearic acid, is introduced into the joined streams.

5. The process according to any of the claims 1 to 4, wherein the starch or polysaccharide particles in the emulsion, which was formed in the microchannels of the microfluidic reactor, are cross linked with a cross linking agent, by radical polymerisation, UV, thermo or gamma ray irradiation.

6. The process according to claim 5, wherein the cross linking agent is added to the emulsion in the presence of a base such as sodium hydroxide.

7. The process according to claim 5 or 6, wherein the cross linking agent is added in an amount of 1 to 10 wt%, preferably 1 to 5 wt%, based on the weight of the polysaccharide or starch contained in the emulsion.

8. The process according to any of the claims 5 to 7, wherein the cross linking agent is a polyfunctional agent, which reacts with the hydroxyl groups of the starch or polysaccharide structure, such as epichlorohydrine or glyoxal.

9. The process according to any of the claims 1 to 8, wherein the starch or polysaccharide particles are ionized by addition of an ionic substance, such as carboxymethyl chloro ether or quaternary ammonium chloro ether, in the presence of a base.

10. The process according to any of the claims 1 to 9, wherein after passing the microchannels of the microfluidic reactor and after addition of the cross linking agent and the ionic substance, the produced mixture of the reaction partners is heated to a temperature between 50 to 100 °C in a heating section.

11. The process according to any of the claims 1 to 10, wherein the outlet stream from the microfluidic reactor is heated in at least two series of heating sections.

12. The process according to any of the claims 1 to 11, wherein either one or all components of the reaction system, namely the inlet streams of the liquids, the microfluidic reactor and/or the outlet stream of the microfluidic reactor are located in at least one heat exchanger.

13. Device for producing starch particles or polysaccharides, wherein two separate liquid inlets are attached to microchannels of a microfluidic reactor, immiscible liquids are unified in the microchannels of the microfluidic reactor and are introduced into a liquid outlet.

14. Device according to claim 13, wherein at the liquid outlet at least one further inlet or duct is attached for introducing a cross-linking agent and/or ionic derivative to the unified immiscible liquids.

15. Device according to claim 13 or 14, wherein the device contains furthermore at least one of a mixing section, a heating section and a cooling section.
